(19) Europäisches Patentamt
European Patent Office
Office européen des brevets

(11) EP 4 148 084 A1

(12) # EUROPEAN PATENT APPLICATION
published in accordance with Art. 153(4) EPC

(43) Date of publication:
**15.03.2023 Bulletin 2023/11**

(21) Application number: **21808213.9**

(22) Date of filing: **23.04.2021**

(51) International Patent Classification (IPC):
***C08G 83/00*** *(2006.01)*

(52) Cooperative Patent Classification (CPC):
**C08G 83/00; F17C 13/00**

(86) International application number:
**PCT/CN2021/089184**

(87) International publication number:
**WO 2021/233065 (25.11.2021 Gazette 2021/47)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **18.05.2020 CN 202010421609**

(71) Applicant: **Shanghaitech University**
**Shanghai 201210 (CN)**

(72) Inventors:
- **ZHANG, Yuebiao**
  **Shanghai 201210 (CN)**
- **LIANG, Congcong**
  **Shanghai 201210 (CN)**
- **SHI, Zhaolin**
  **Shanghai 201210 (CN)**

(74) Representative: **Canzler & Bergmeier Patentanwälte Partnerschaft mbB**
**Despag-Straße 6**
**85055 Ingolstadt (DE)**

(54) **METAL-ORGANIC FRAMEWORK MATERIAL**

(57) The present invention pertains to the field of inorganic materials, and in particular relates to a metal-organic framework material. The present invention provides a metal-organic framework material, comprising a plurality of linked M-O-L secondary structural units, wherein M is selected from metals, O is an oxygen atom of a carboxylate radical-based linking cluster, L is an organic linking ligand, and the organic linking ligand includes a flexible triangular ligand and two or more linear ligands with different lengths. The metal-organic framework material provided by the present invention has an ultra-high specific surface area, an appropriate pore shape/size, and a properly functionalized inner pore surface chemical environment, and has an ultra-high storage capacity for gas molecules, especially methane gas, and is applicable to high-density and small-volume effective storage of on-board natural gas of a natural gas vehicle, greatly increasing the cruising range of the vehicle.

EP 4 148 084 A1

## Description

### FIELD OF DISCLOSURE

The present invention relates to the field of inorganic materials, and particularly to a metal-organic framework material.

### DESCRIPTION OF RELATED ARTS

Metal-Organic Frameworks (MOFs) are organic-inorganic hybrid materials with intramolecular pores, and are formed by self-assembly of organic ligands and metal ions or clusters through coordination bonds. MOFs are known for their high surface area and high porosity. Therefore, MOFs can be used in many different fields, which is also a research hotspot in the field of materials in recent years.

How to further improve the specific surface area, pore shape/size, and functionalized intra-pore surface chemical environment are the main technical issues for metal-organic framework materials in practice.

### SUMMARY OF THE PRESENT INVENTION

In view of the above-mentioned shortcomings of existing technology, the present invention aims to provide a metal-organic framework material, to solve the problem of existing technology.

In order to achieve the above and other objects, the present invention provides a metal-organic framework material, comprising a plurality of connected M-O-L secondary structure units, wherein the M is selected from metals, the O is an oxygen atom from a carboxylate-radical-based linking cluster, and the L is an organic linking ligand, wherein the organic linking ligand comprises a flexible triangular ligand, and two or more linear ligands with different lengths.

In some embodiments, the M is Zn.

In some embodiments, the metal-organic framework material may be a three-dimensional porous framework formed by Zn-O-octahedral inorganic units connected by the organic linking ligands.

In some embodiments, the linear ligand is selected from a binary nitrogen-containing aromatic heterocyclic organic ligand, a binary aromatic carboxylic acid organic ligand, or a mixture of the binary nitrogen-containing aromatic heterocyclic organic ligand and the binary aromatic carboxylic acid organic ligand.

In some embodiments, the linear ligand is selected from the groups with the chemical structural formula shown below:

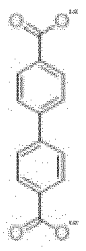 , 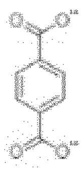 , 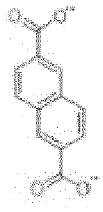 , 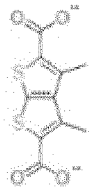 , 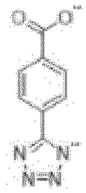 , 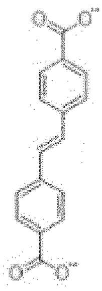 .

In some embodiments, the flexible triangular ligand is selected from a ternary aromatic carboxylic acid organic ligand.

In some embodiments, the flexible triangular ligand is selected from the group with the chemical structural formula shown below:

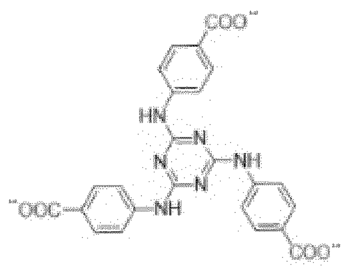 .

In some embodiments, the metal-organic framework material is in the form of $(Zn_4O)_6(TATAB)_8(NDC)_2(BPDC)_4$, $(Zn_4O)_6(TATAB)_8(TDC)_3(BPDC)_3$, $(Zn_4O)_6(TATAB)_8(TZB)_3(BPDC)_3$, $(Zn_4O)_6(TATAB)_8(BDC)_3(EDBA)_3$, $(Zn_4O)_6(TATAB)_8(BDC)_3(EDBA)_3$, $(Zn_4O)_{12}(TATAB)_{16}(TDC)_9(EDBA)_3$, or $(Zn_4O)_3(TATAB)_4(TZB)_2(EDBA)_1$.

The present invention further provides a method for preparing the metal-organic framework material, comprising: dispersing a metal skeleton precursor molecule, an organic linking ligand precursor molecule in a solvent, and performing self-assembling to obtain the metal-organic framework material.

The present invention further provides the use of the metal-organic framework material in the preparation of gas storage material.

In some embodiments, the gas is selected from $CH_4$, $H_2$, $O_2$, $PH_3$, and $SF_6$.

## BRIEF DESCRIPTION OF THE DRAWINGS

FIG. 1 shows a schematic diagram of the construction process of MOFs.

FIG. 2 shows a schematic diagram of the synthesis of a series of four-component porous framework materials, ligand sequence in a particular orientation and three-dimensional arrangement of the series of four-component porous framework materials according to an embodiment of the present invention.

FIG. 3 shows a schematic diagram of the single-crystal structure and organic ligand sequence of ST-31 according to an embodiment of the present invention.

FIG. 4 shows a schematic diagram of the single-crystal structure and organic ligand sequence of ST-32 according to an embodiment of the present invention.

FIG. 5 shows a schematic diagram of the single-crystal structure and organic ligand sequence of ST-33 according to an embodiment of the present invention.

FIG. 6 shows a schematic diagram of the single-crystal structure and organic ligand sequence of ST-5 according to an embodiment of the present invention.

FIG. 7 shows a schematic diagram of the single-crystal structure and organic ligand sequence of ST-51 according to an embodiment of the present invention.

FIG. 8 shows a schematic diagram of the single-crystal structure and organic ligand sequence of ST-52 according to an embodiment of the present invention.

FIG. 9 shows a schematic diagram of the single-crystal structure and organic ligand sequence of ST-53 according to an embodiment of the present invention.

FIG. 10 shows a schematic diagram of a mesoporous macrocage with a variety of different sizes and chemical environments in the series of four-component porous framework materials according to an embodiment of the present invention.

FIG. 11 shows a schematic diagram of powder X-ray diffraction analyses pattern of the series of four-component porous framework materials according to an embodiment of the present invention.

FIG. 12 shows a schematic diagram of $N_2$ isothermal adsorption curve at 77K of the series of four-component porous framework materials according to an embodiment of the present invention.

FIG. 13 shows a schematic diagram of Ar isothermal adsorption curve at 87 K and the pore size distribution of the series of four-component porous framework materials according to an embodiment of the present invention.

FIG. 14 shows a schematic diagram of total methane uptake under ultrahigh-pressure (200 bar) at 298 K of the series of four-component porous framework materials according to an embodiment of the present invention.

FIG. 15 shows a schematic diagram of operation capacity under ultrahigh pressure (200 bar) at 298 K of the series

of four-component porous framework materials according to an embodiment of the present invention.

## DETAILED DESCRIPTION OF THE PREFERRED EMBODIMENTS

To make the purpose, technical solution and beneficial technical effects of the present invention clear, embodiments will be described below for explaining the present invention in detail. Those skilled in the art can easily understand other advantages and effects of the present invention according to the contents disclosed by the specification.

Through extensive practical research, for example, reasonable molecular design, directed assembly of crystal structure, activation and characterization of porous materials, and theoretical simulation and computational prediction, a series of new metal-organic framework materials with ultra-high specific surface area, adjustable pore shape/size, and functionalized intra-pore surface are synthesized by the present invention. These metal-organic framework materials have excellent gas storage capacity and have significant application value in the preparation of gas storage materials.

A first aspect of the present invention provides a metal-organic framework material, comprising a plurality of connected M-O-L secondary structure units (SBUs), where the M is selected from metals, the O is an oxygen atom from a carboxylate-radical- based linking cluster, and the L is an organic linking ligand, where the organic linking ligand comprises a flexible triangular ligand, and two or more linear ligands with different lengths. The lengths of the linear ligands are obtained by measuring the distance between the central oxygen atoms of the secondary structural units at both ends of the linear ligands. A mixed ligand is formed in the metal-organic framework material by selecting the linear ligands with different lengths (25-10 Å) and the flexible triangular ligand. Therefore, control of the one-dimensional sequence of organic ligands in a specific direction is achieved, and the pore size, pore chemical environment, gas (e.g., methane, etc.) adsorption site distribution, and energy distribution in the porous framework material are regulated, thus its gas adsorption sites can be optimized and gas storage performance can be improved.

Metals and their associated ions that are suitable for forming a metal-organic skeleton of the MOFs materials provided in the present invention are known to those skilled in the art. For example, the metals and their associated ions that can be used to form the metal-organic skeleton may comprise one of alkali metals, alkaline earth metals, transition metals, lanthanide elements, actinide elements, metalloid, late transition metals, or a combination thereof. The metal and multiple ligands in the skeleton can form a complex compound, or the metal may be introduced into the metal-organic framework material by simple ion exchange. In an embodiment, the M may be Zn. The metal-organic framework material may be a three-dimensional porous framework formed by Zn-O-octahedral inorganic units connected by organic linking ligands. The Zn-O-octahedral inorganic unit may be a nitrogen-containing heterocycle substituted Zn-O-octahedral inorganic unit. The coordination number of M in the metal-organic framework material may be 6. The coordination number is typically determined by the geometry of the coordinated metal center and refers to the number of bondings of the central metal or metal ions, where each of the bondings will separate due to bond angle.

In the metal-organic framework materials provided by the present invention, the linear ligands usually refer to binary organic ligands with active functional groups capable of bonding to the metal-organic skeleton at both ends. Binary organic ligands that are suitable for forming MOFs materials are known to those skilled in the art. For example, the linear ligands can be selected from binary nitrogen-containing aromatic heterocyclic organic ligands, binary aromatic carboxylic acid organic ligands, or a mixture of the binary nitrogen-containing aromatic heterocyclic organic ligand and the binary aromatic carboxylic acid organic ligand, etc. In the aromatic carboxylic acid organic ligands, the group interacted with and connected to the metal organic skeleton is usually a charged coordination functional group, such as a -COO- group. The aromatic carboxylic acid organic ligands usually have at least one aryl group or heteroaryl group, where the aryl group usually refers to a cyclic compound having at least one aromatic ring and containing no heteroatom in any ring, and the heteroaryl group usually refers to a heterocyclic compound having at least one aromatic ring and containing N, O, and/or S atoms as heteroatoms. In the nitrogen-containing aromatic heterocyclic organic ligands, the group interacted with and connected to the metal organic skeleton is usually a nitrogen-containing heteroaryl group. The nitrogen-containing heteroaryl group usually refers to a heterocyclic group having at least one aromatic ring and containing N atoms as heteroatoms. In an embodiment, the nitrogen-containing heteroaryl group may be selected from charged coordination functional groups such as a tetrazole ester. In the mixture of the binary nitrogen-containing aromatic heterocyclic organic ligand and the binary aromatic carboxylic acid organic ligand, the group interacted with and connected to the metal organic skeleton is usually a -COO- group and a nitrogen-containing heteroaryl group. The binary organic ligands can have two functional groups capable of binding to the metal-organic skeleton. In an embodiment, the linear ligands are selected from the groups with the chemical structural formula shown below:

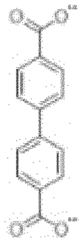 (Formula I), 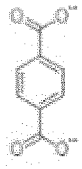 (Formula II), 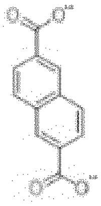 (Formula III),

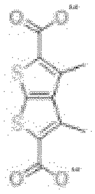 (Formula IV), 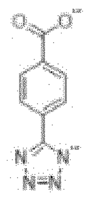 (Formula V), 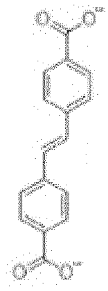 (Formula VI).

In another embodiment, the linear ligand is a combination of the group with formula I and the group with formula II.

In another embodiment, the linear ligand is a combination of the group with formula I and the group with formula III.

In another embodiment, the linear ligand is a combination of the group with formula I and the group with formula IV.

In another embodiment, the linear ligand is a combination of the group with formula I and the group with formula V.

In another embodiment, the linear ligand is a combination of the group with formula VI and the group with formula II.

In another embodiment, the linear ligand is a combination of the group with formula VI and the group with formula III.

In another embodiment, the linear ligand is a combination of the group with formula VI and the group with formula IV.

In another embodiment, the linear ligand is a combination of the group with formula VI and the group with formula V.

The flexible triangular ligands in the metal-organic framework materials provided by the present invention usually refer to ternary organic ligands with active functional groups capable of bonding to the metal-organic skeleton. The flexible triangular ligands that are suitable for forming MOFs materials are known to those skilled in the art. For example, the flexible triangular ligands can be selected from ternary aromatic carboxylic acid organic ligands, etc. In ternary aromatic carboxylic acid organic ligands, the group that interacted with and connected to the metal organic skeleton is usually a charged coordination functional group, such as a -COO- group. The aromatic carboxylic acid organic ligands usually have at least one aryl group or heteroaryl group. The ternary organic ligands can have three functional groups capable of binding to the metal-organic skeleton. In a specific embodiment, the flexible triangular ligand can be an organic ligand centered on 4,4',4"-s-triazin -1,3,5-triyltri-p-aminobenzoic acid, specifically, the flexible triangular ligand is selected from the groups with the chemical structural formula shown below:

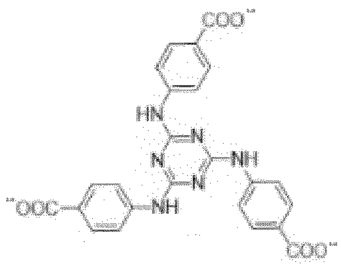 Formula VII.

In a specific embodiment, the flexible triangular ligand in the metal-organic framework material is the group with formula VII, the linear ligand is a combination of the group of formula I and the group of formula III, and the metal-organic framework material may be in a form of $(Zn_4O)_6(TATAB)_8(NDC)_2(BPDC)_4$ (ST-31).

In a specific embodiment, the flexible triangular ligand in the metal-organic framework material is the group with formula VII, the linear ligand is a combination of the group of formula I and the group of formula IV, and the metal-organic framework material may be in a form of $(Zn_4O)_6(TATAB)_8(TDC)_3(BPDC)_3$ (ST-32).

In a specific embodiment, the flexible triangular ligand in the metal-organic framework material is the group with formula VII, the linear ligand is a combination of the group of formula I and the group of formula V, and the metal-organic framework material may be in a form of $(Zn_4O)_6(TATAB)_8(TZB)_3(BPDC)_3$ (ST-33).

In a specific embodiment, the flexible triangular ligand in the metal-organic framework material is the group with formula VII, the linear ligand is a combination of the group of formula VI and the group of formula III, and the metal-organic framework material may be in a form of $(Zn_4O)_6(TATAB)_8(BDC)_3(EDBA)_3$ (ST-5).

In a specific embodiment, the flexible triangular ligand in the metal-organic framework material is the group with formula VII, the linear ligand is a combination of the group of formula VI and the group of formula II, and the metal-organic framework material may be in a form of $(Zn_4O)_6(TATAB)_8(BDC)_3(EDBA)_3$ (ST-51).

In a specific embodiment, the flexible triangular ligand in the metal-organic framework material is the group with formula VII, the linear ligand is a combination of the group of formula VI and the group of formula IV, and the metal-organic framework material may be in a form of $(Zn_4O)_{12}(TATAB)_{16}(TDC)_9(EDBA)_3$ (ST-52).

In a specific embodiment, the flexible triangular ligand in the metal-organic framework material is the group with formula VII, the linear ligand is a combination of the group of formula VI and the group of formula V, and the metal-organic framework material may be in a form of $(Zn_4O)_3(TATAB)_4(TZB)_2(EDBA)_1$ (ST-53).

A second aspect of the present invention provides a method for preparing the metal-organic framework material provided in the first aspect of the present invention, comprising: dispersing a metal skeleton precursor molecule, an organic linking ligand precursor molecule in a solvent, and performing self-assembling to obtain the metal-organic framework material.

In the method for preparing the metal-organic framework material provided by the present invention, the flexible triangular ligand precursor molecule and the linear ligand precursor molecule usually correspond to the flexible triangular ligand and the linear ligand, respectively. With the knowledge of the flexible triangular ligand and linear ligand, suitable flexible triangular ligand precursor molecules and linear ligand precursor molecules are known to those skilled in the art, for example, the ligand groups with formula I to formula VII usually correspond to the precursor molecules with formula VIII to formula XIV.

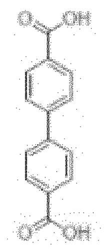 (Formula VIII), 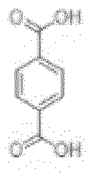 (Formula IX), 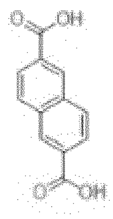 (Formula X),

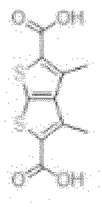 (Formula XI), 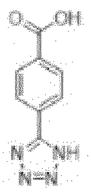 (Formula XII), 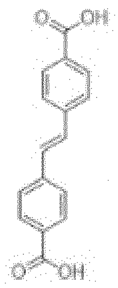 (Formula XII),

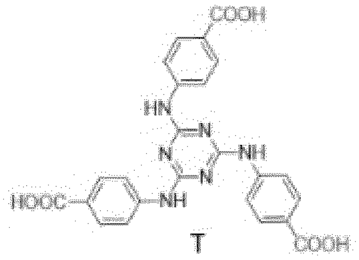
T (Formula IV).

In the method for preparing the metal-organic framework material provided by the present invention, the reaction can usually be carried out under heating conditions which allows the organic ligand precursor molecules to be fully dissolved and dispersed in the reaction system and drives the reaction forward. For example, the reaction temperature can be 75 to 100°C. A person skilled in the art can adjust the reaction time according to the reaction process, for example, the reaction process can be determined by powder X-ray diffraction, microscopic observation, etc.

In the method for preparing the metal-organic framework material provided by the present invention, the reaction can usually be carried out in the presence of a solvent, and the solvent usually can disperse the reaction material sufficiently. Solvents suitable for the preparation of metal-organic framework materials are known to those skilled in the art, for example, the solvent can be nonprotonic solvent, more specifically can be DEF, DMF, etc.

In the method for preparing the metal-organic framework material provided by the present invention, the reaction can also be carried out in the presence of a base, so that the organic carboxylic acid ligands are deprotonated and then ligate with inorganic structural units to form porous frameworks. Suitable methods for providing alkaline reaction conditions are known to those skilled in the art, for example, non-protonic polar solvents such as N-methylpyrrolidone, N,N-dimethylformamide, N,N-diethylformamide, etc. can be used to provide alkalinity by heating and degrading.

In the method for preparing the metal-organic framework material provided by the present invention, a person skilled in the art may select a suitable method for post-treatment of the reaction products to provide the metal-organic framework material. For example, the steps of post-treatment may include: collecting crystals, and washing the crystals, to provide the metal-organic framework material.

A third aspect of the present invention provides the use of the metal-organic framework material provided in the first aspect of the present invention in the field of gas storage material preparation, where the gas can be methane ($CH_4$), hydrogen ($H_2$), oxygen ($O_2$), phosphine ($PH_3$), sulfur hexafluoride ($SF_6$), etc. The metal-organic framework material provided by the present invention can be used to prepare gas storage materials by reasonably regulating the pore shape, size, surface properties, and arranging adsorption sites. Effective utilization of the restricted domain space and efficient dense accumulation of gas molecules are fully realized, and working capacity is optimized, therefore, the metal-organic framework material has a high storage capacity for gas molecules.

The metal-organic framework materials provided by the present invention have an ultra-high specific surface area, appropriate pore shape/size, and reasonably functionalized intra-pore surface chemical environment, which provides ultra-high deliverable capacity for gas molecules, especially methane gas, and can be applied to effective storage of compressed natural gas in a high-density and small-volume way in natural gas vehicles, thus greatly improving the endurance mileage of vehicles. Further, the metal-organic framework materials provided by the present invention can be applied to on-board hydrogen storage, storage of high value-added gases (such as PHs, $SF_6$, etc.), storage of greenhouse gases such as carbon dioxide, and adsorption-type thermal storage materials, etc. Therefore, the metal-organic framework materials provided by the present invention have great prospects for industrial applications.

The present invention is illustrated in more detail by the following embodiments, however, these embodiments are not limiting the scope of the present invention.

**Embodiment 1**

Synthesis of ST-31 $(Zn_4O)_6(TATAB)_8(NDC)_2(BPDC)_4$

$Zn(NO_3)_2{\cdot}6H_2O$ (196.3 mg, 1.20 mmol), $H_3TATAB$ (4,4',4"-s-triazin -1,3,5-triyltri-p-aminobenzoic acid, 87.5 mg, 0.18 mmol), $H_2NDC$ (naphthalene dicarboxylic acid, 30.3 mg, 0.14mmol), and $H_2BPDC$ (diphenic acid, 67.8 mg, 0.28 mmol) were weighed in a 20 ml glass vial, and 15 mL of N,N-diethylformamide (DEF) solvent was added. The mixture was sonicated for 10 min and then heated at 95°C for 10 min until the ligands were dissolved, and the mixture was placed in an oven at 85°C for 48 h to obtain bulk crystals. Bulk crystals were collected and washed six times with 10 mL of N,N-dimethylformamide (DMF); yield: 25.8% based on $H_2NDC$. IR spectra of the activated samples (4000-400 $cm^{-1}$): 1593(m), 1520(m), 1496(m), 1399(s), 1366(s), 1347(s),1235(m), 1182(m), 1016(w), 858(w), 782(m), 702(w), 583(w), 500(m). Elemental analysis of the activated sample: Calcd. For $C_{134}H_{80}N_{24}O_{39}Zn_{12}$, theoretical values: C, 46.48; H,

2.35; N, 9.79%; measured values: C, 45.89; H, 2.45; N, 9.61%. FIG. 3 shows a schematic diagram of the single-crystal structure and organic ligand sequence of ST-31.

**Embodiment 2**

Synthesis of ST-32 $(Zn_4O)_6(TATAB)_8(TDC)_3(BPDC)_3$

$Zn(NO_3)_2 \cdot 6H_2O$ (397.3 mg, 1.91 mmol), $H_3TATAB$ (73.0 mg, 0.15mmol), $H_2TDC$ (3,4-dimethyl(2,3-B)thiophene-2,5-dicarboxylic acid, 77.5 mg, 0.30mmol), and $H_2BPDC$ (72.7 mg, 0.30 mmol) were weighed in a 20 ml glass vial, and 15 mL of N,N-diethylformamide (DEF) solvent was added. The mixture was sonicated for 10 min and then heated at 95°C for 10 min until the ligands were dissolved, and the mixture was placed in an oven at 85°C for 48 h to obtain bulk crystals. Bulk crystals were collected and washed six times with 10 mL of N,N-dimethylformamide (DMF); yield: 27.6% based on $H_2TDC$. IR spectra of the activated samples (4000-400 $cm^{-1}$): 1581(m), 1514(m), 1484(m), 1373(s), 1345(s), 1263(m),1236(m), 1179(m), 1016(w), 855(w), 805(w), 781(m), 732(s), 698(s), 665(w), 569(w), 504(m). Elemental analysis of the activated sample: Calcd. For $C_{132}H_{81}N_{24}O_{39}S_3Zn_{12}$, theoretical values: C, 45.19; H, 2.33; N, 9.58%; measured values: C, 44.49; H, 2.36; N, 9.54; S, 2.77%. FIG. 4 shows a schematic diagram of the single-crystal structure and organic ligand sequence of ST-32.

**Embodiment 3**

Synthesis of ST-33 $(Zn_4O)_6(TATAB)_8(TZB)_3(BPDC)_3$

$Zn(NO_3)_2 \cdot 6H_2O$ (373.3 mg, 1.80 mmol), $H_3TATAB$ (175.1 mg, 0.36mmol), $H_2TZB$ (5-(4- carboxyphenyl)-1H-tetrazole, 11.5 mg, 0.60mmol), and $H_2BPDC$ (29.1 mg, 0.30 mmol) were weighed in a 20 ml glass vial, and 15 mL of N,N-diethylformamide (DEF) solvent was added. The mixture was sonicated for 10 min and then heated at 95°C for 10 min until the ligands were dissolved, and the mixture was placed in an oven at 85°C for 48 h to obtain bulk crystals. Bulk crystals were collected and washed six times with 10 mL of N,N-dimethylformamide (DMF); yield: 21.3% based on $H_2TZB$. IR spectra of the activated samples (4000-400 $cm^{-1}$): 1582(m), 1521(m), 1496(m), 1399(s), 1347(s), 1236(m), 1183(m), 1017(w), 923(w), 857(m), 806(m), 782(m), 733(m), 698(m), 492(m). Elemental analysis of the activated sample: Calcd. For $C_{129}H_{78}N_{30}O_{36}Zn_{12}$, theoretical values: C, 45.45; H, 2.31; N, 12.33%; measured values: C, 43.03; H, 2.88; N, 12.55%. FIG. 5 shows a schematic diagram of the single-crystal structure and organic ligand sequence of ST-33.

**Embodiment 4**

Synthesis of ST-5 $(Zn_4O)_6(TATAB)_8(BDC)_3(EDBA)_3$

$Zn(NO_3)_2 \cdot 6H_2O$ (378.0 mg, 1.83 mmol), $H_3TATAB$ (146.0 mg, 0.30mmol), $H_2BDC$ (1,4-dicarboxybenzene, 24.9 mg, 0.15 mmol), and $H_2EDBA$ (4,4'-stilbenedicarboxylic acid, 40.2 mg, 0.15 mmol) were weighed in a 20 ml glass vial, and 15 mL of N,N-diethylformamide (DEF) solvent was added. The mixture was sonicated for 10 min and then heated at 95°C for 10 min until the ligands were dissolved, and the mixture was placed in an oven at 85°C for 48 h to obtain bulk crystals. Bulk crystals were collected and washed six times with 10 mL of N,N-dimethylformamide (DMF); yield: 26.4% based on $H_2BDC$. IR spectra of the activated samples (4000-400 $cm^{-1}$): 1583(m), 1520(m), 1497(m), 1396(s), 1367(s), 1346(s),1234(m), 1182(m), 1017(w), 857(w), 804(w), 781(m), 702(w), 581(w), 500(m). Elemental analysis of the activated sample: Calcd. For $C_{129}H_{81}N_{24}O_{39}Zn_{12}$, theoretical values: C, 45.90; H, 2.42; N, 9.96%; measured values: C, 45.75; H, 2.90; N, 9.97%. FIG. 6 shows a schematic diagram of the single-crystal structure and organic ligand sequence of ST-5.

**Embodiment 5**

Synthesis of ST-51 $(Zn_4O)_6(TATAB)_8(BDC)_3(EDBA)_3$

$Zn(NO_3)_2 \cdot 6H_2O$ (368.4 mg, 1.78 mmol), $H_3TATAB$ (87.6 mg, 0.18mmol), $H_2NDC$ (59.7 mg, 0.276 mmol), and $H_2EDBA$ (37.0 mg, 0.138 mmol) were weighed in a 20 ml glass vial, and 15 mL of N,N-diethylformamide (DEF) solvent was added. The mixture was sonicated for 10 min and then heated at 95°C for 10 min until the ligands were dissolved, and the mixture was placed in an oven at 85°C for 48 h to obtain bulk crystals. Bulk crystals were collected and washed six times with 10 mL of N,N-dimethylformamide (DMF); yield: 25.1% based on $H_2EDBA$. IR spectra of the activated samples (4000-400 $cm^{-1}$): 1581(m), 1521(m), 1496(m), 1399(s), 1367(s), 1347(s),1234(m), 1182(m), 1016(w), 858(w), 780(m), 700(w), 578(w), 499(m). Elemental analysis of the activated sample: Calcd. For $C_{134}H_{80}N_{24}O_{39}Zn_{12}$, theoretical

values: C, 46.86; H, 2.35; N, 9.79%; measured values: C, 45.47; H, 2.69; N, 9.02%. FIG. 7 shows a schematic diagram of the single-crystal structure and organic ligand sequence of ST-51.

**Embodiment 6**

Synthesis of ST-52 $(Zn_4O)_{12}(TATAB)_{16}(TDC)_9(EDBA)_3$

$Zn(NO_3)_2 \cdot 6H_2O$ (494.7 mg, 2.39 mmol), $H_3TATAB$ (182.4 mg, 0.38mmol), $H_2TDC$ (48.4 mg, 0.19 mmol), and $H_2EDBA$ (50.3 mg, 0.19 mmol) were weighed in a 20 ml glass vial, and 15 mL of N,N-diethylformamide (DEF) solvent was added. The mixture was sonicated for 10 min and then heated at 95°C for 10 min until the ligands were dissolved, and the mixture was placed in an oven at 85°C for 48 h to obtain bulk crystals. Bulk crystals were collected and washed six times with 10 mL of N,N-dimethylformamide (DMF); yield: 21.0% based on $H_2TDC$. IR spectra of the activated samples (4000-400 $cm^{-1}$): 1581(m), 1485(m), 1370(s), 1340(s), 1263(m), 1234(m), 1177(m), 1013(w), 857(w), 804(w), 781(m), 733(s), 698(s). Elemental analysis of the activated sample: Calcd. For $C_{261}H_{162}N_{48}O_{78}S_9Zn_{24}$, theoretical values: C, 44.30; H, 2.31; N, 9.50%; measured values: C, 42.86; H, 2.43; S, 3.58; N, 9.48%. FIG. 8 shows a schematic diagram of the single-crystal structure and organic ligand sequence of ST-52.

**Embodiment 7**

Synthesis of ST-53 $(Zn_4O)_3(TATAB)_4(TZB)_2(EDBA)_1$

$Zn(NO_3)_2 \cdot 6H_2O$ (386.7 mg, 1.87 mmol), $H_3TATAB$ (146.0 mg, 0.30mmol), $H_2TZB$ (28.7 mg, 0.15 mmol), and $H_2EDBA$ (40.2 mg, 0.15 mmol) were weighed in a 20 ml glass vial, and 15 mL of N,N-diethylformamide (DEF) solvent was added. The mixture was sonicated for 10 min and then heated at 95°C for 10 min until the ligands were dissolved, and the mixture was placed in an oven at 85°C for 48 h to obtain bulk crystals. Bulk crystals were collected and washed six times with 10 mL of N,N-dimethylformamide (DMF); yield: 18.7% based on $H_2TZB$. IR spectra of the activated samples (4000-400 $cm^{-1}$): 1584(m), 1520(m), 1496(m), 1397(s), 1367(s), 1346(s),1235(m), 1183(m), 1017(w), 857(w), 804(w), 781(m), 732(m), 697(m), 502(w), 497(m). Elemental analysis of the activated sample: Calcd. For $C_{128}H_{78}N_{32}O_{78}Zn_{12}$, theoretical values: C, 45.10; H, 2.31; N, 13.15%; measured values: C, 43.71; H, 2.58; S, 3.58; N, 11.94%. FIG. 9 shows a schematic diagram of the single-crystal structure and organic ligand sequence of ST-53.

**Embodiment 8**

Activation of the series of four-component metal-organic frameworks

In order to further analyze the porosity and methane adsorption performance under high-pressure of MOFs, solvent molecules were removed from the frameworks by solvent exchange and supercritical $CO_2$ activation methods. Specifically, the as-synthesized crystals were first washed with DMF for three days in which the ligand molecules were removed by exchanging solvent three times a day; and then the as-synthesized crystals were immersed in dichloromethane ($CH_2Cl_2$) three times every day until the elimination of DMF in MOFs (monitored by NMR spectroscopy). After complete removal of DMF molecules, the samples were exchanged with acetone five times before supercritical $CO_2$ activation to remove $CH_2Cl_2$ molecules. A sample with a volume less than 5 mL was transferred to a supercritical chamber. The supercritical chamber was fully flushed with liquid carbon dioxide for 2 hours, heated for 1 hour, and cooled to below 10°C; and then the supercritical chamber was fully flushed with liquid carbon dioxide again for 2 hours, heated again for 1 hour, and cooled to below 10°C; the above operations were repeated 5 times. And the supercritical chamber was full of liquid carbon dioxide after being fully flushed, heated for 3 hours, and deflated.

After being activated by supercritical carbon dioxide, the sample was quickly transferred to a glove box and then placed in an adsorption cell, which was evacuated and heated at 100°C for 10 hours.

**Embodiment 9**

Fig. 10 shows a schematic diagram of mesoporous macrocages of the series of four-component porous framework materials. The sample was placed on a single-crystal silicon sample table, and Bruker D8 powder diffractometer with a current of 40 mA and a voltage of 40 kV was used to perform powder X-ray diffraction analyses. The collection range was 2-30°, the step size is 0.02° and the step speed is 4s. The collected patterns were compared with the Bragg diffraction strips simulated by the single-crystal structure to determine the crystalline state and phase purity of the sample. Fig. 11 shows the results of powder X-ray diffraction analyses.

A sample with the guest molecules completely removed was weighed and transferred to a Conta Autosorb IQ

adsorption station for analysis, and point parameters were set to obtain a nitrogen isothermal adsorption curve at 77 K with uniform distribution of points, where a $P/P_0$ range is typically $10^{-5}$-0.992. The gas used in the experiment is $N_2$ with ultra-high purity (99.999%). Fig. 12 shows a $N_2$ isothermal adsorption curve at 77 K.

Likewise, a sample with the guest molecules completely removed was weighed and transferred to a Conta Autosorb IQ adsorption station for analysis, and point parameters were set to obtain an argon isothermal adsorption curve at 87 K with uniform distribution of points, where a $P/P_0$ range is typically $10^{-5}$-0.992. The gas used in the experiment is Ar with ultra-high purity (99.999%). And according to the adsorption curve, the models 87 K at zeolite, cylinder pores, NLDFT were used to fit and obtain the pore size distribution of the sample. Fig. 13 shows an Ar isothermal adsorption curve and a pore size distribution at 87 K.

## Embodiment 10

High-pressure methane adsorption evaluation of the series of four-component metal-organic frameworks

The obtained nitrogen isothermal adsorption curves at 77 K were fitted employing the BET model $\frac{1}{W(\frac{p}{p_0}-1)} = \frac{1}{W_m C} + \frac{c-1}{W_m C}(\frac{p}{p_0})$, where P is a pressure of the system, $W$ is an adsorption amount, $W_m$ is a saturated adsorption amount of a single molecular layer, C is a constant, $P/P_0$ is a relative pressure, and the intercept plus the slope in the equation is $W_m$ which in turn leads to the BET specific surface area ($S_{BET}$). The following four rules should be followed:

1) the adsorption curve is converted into a curve with $P/P_0$ as the horizontal coordinate and $W(1-P/P_0)$ as the vertical coordinate, and a pressure range before the curve rises to the highest point should be chosen.

2) C is a constant that is greater than zero.

3) $P/P_0$ of the adsorption curve corresponding to $W_m$ should be within the pressure range listed in the rule 1).

4) The relative pressure $1/(\sqrt{C}+1)$ corresponding to the saturated adsorption amount of the single molecular layer calculated by BET theory should be consistent with the $P/P_0$ obtained in the rule 3), and the error should be kept at least within 20%.

The saturation adsorption volume (i.e. the adsorption volume at $P/P_0$ = 0.992) of the $N_2$ adsorption curve (77 K) was converted into a volume of an equivalent amount of liquid nitrogen, which is the pore volume ($V_p$) of the sample. The pore size distribution (PSD) of this series of materials was obtained by fitting the Ar adsorption curves (87 K) with a commercial DFT model (Ar 87 K at zeolite, cylinder pores, NLDFT).

The high-pressure tests were done mainly by using an iSorb™ HP2 instrument from Quantachrome, USA. The system is equipped with a heating cover and a water bath for high-temperature activation, testing and room temperature testing of the samples, respectively. The refrigerant in the water bath is a combination of ethylene glycol and water (ethylene glycol: water = 1:3 (*v:v*)), and its temperature fluctuation range is ±0.02°C. The sample needs to be heated and degassed at 100°C until the system vacuum is maintained below 0.00001 bar before testing. The dead volume measurements were done by the He expansion method at 1, 3, 4, and 5 bar, respectively. The specific operations are as follows:

1) An empty sample tube and a sample tube with a sample were weighed accurately at least three times in parallel to ensure a correct and accurate weight. Contact between the sample and air should be avoided during the weighing process, and other operations such as sample loading should be done in a glove box.

2) The sample tube installed with a manual valve was transferred to an adsorption analyzer station, and connected and tightened using a VCR assembly in the middle. The water bath and insulation material were installed, and the liquid level of the water bath should be consistent for each test to ensure reproducible results.

3) The water bath temperature is set to be the same as a chamber temperature ($T_R$ = $T_s$ = 318 K) and equilibrated for a sufficient time. $V_{s0}$ measurements were performed several times after the sample was degassed and an average value was obtained.

4) The temperature of the water bath was set as a test temperature $T_s$ and equilibrated for a sufficient time to perform a $V_{sa}$ measurement.

5) The system was degassed for about half an hour after a dead volume test to ensure complete removal of He, and then the methane adsorption test was started to obtain an excess adsorption capacity $n_{ex}$.

6) The background adsorption capacity at different temperatures was tested with equal volumes of tin beads according to the standard procedure described above, and was tested several times in parallel to ensure accuracy. In the subsequent sample tests, a background adsorption capacity was subtracted from a measured adsorption capacity of the sample to obtain a true adsorption capacity $n_{ex}$ of the sample.

A total adsorption amount was obtained through the equation given by:

$$n_{tot} = n_{ex} + V_p \rho_{bulk}(P,T)\ ,$$

where $\rho_{bulk}$(P,T) is the gas density at a corresponding $P$ and $T$ ($mmol \cdot cm^{-3}$, which is mainly obtained from the NIST database, http:// webbook.nist.gov/cgi/cbook.cgi?ID= C74828 ), and Vp is a pore volume of the sample ($cm^3 \cdot g^{-1}$).

The crystal density of porous framework material is obtained by multiplying the formula weight of the single-crystal structure and the formula number (Z) of each cell together, where the mass (M) of one unit cell is obtained, and then dividing by the volume (V) of the whole unit cell to obtain the crystal density ($d_{cry.}$). The porosity of the material was calculated by using the Atom values and Surfaces section in Materials Studio, where nitrogen was set as the probe molecule to calculate the cell volume of the whole frame and the cell free volume in the frame. And the cell free volume divided by the cell free volume is the porosity of the framework.

The results of crystal density ($d_{cry.}$), porosity, BET specific surface area ($S_{BET}$), pore volume ($V_p$), pore size distribution (PSD), methane adsorption performance ($A_{CH4}$), bulk density ($d_{CH4}$), and available working capacity ($C_{CH4}$) of the series of four-component porous framework materials are shown in Table 1.

Table 1

| Materials | $d_{cry.}$ | *Void* | $S_{BET}$ | | $V_p$ | Micro- | Meso- | $A_{CH4}$ | $d_{CH4}$ | $C_{CH4}$ | |
|---|---|---|---|---|---|---|---|---|---|---|---|
| | $g/cm^3$ | % | $m^2/g$ | $m^2/cm^3$ | $cm^3/g$ | ***PSD*** **(nm)** | | $cm^3/cm^3$ | $g/cm^3$ | $cm^3/cm^3$ | g/g |
| ST-5 | 0.354 | 86.4 | 6175 | 2186 | 2.62 | 1.3-1.8 | 2.4-3.0 | 313 | 0.241 | 292 | 0.59 |
| ST-31 | 0.351 | 86.2 | 5745 | 2016 | 2.50 | 1.3-1.9 | 2.2-2.6 | 299 | 0.244 | 279 | 0.57 |
| ST-32 | 0.364 | 86.3 | 5569 | 2027 | 2.51 | 1.3-1.9 | 2.3-2.7 | 317 | 0.248 | 296 | 0.58 |
| ST-33 | 0.359 | 86.6 | 5461 | 1960 | 2.52 | 1.3-1.8 | 2.3-2.8 | 304 | 0.241 | 284 | 0.57 |
| ST-51 | 0.360 | 86.0 | 5054 | 1819 | 2.48 | 1.4-1.9 | 2.2-2.9 | 301 | 0.241 | 280 | 0.56 |
| ST-52 | 0.372 | 85.6 | 5061 | 1883 | 2.40 | 1.3-1.9 | 2.3-2.6 | 303 | 0.243 | 282 | 0.54 |
| ST-53 | 0.355 | 86.2 | 5060 | 1796 | 2.50 | 1.3-1.9 | 2.2-2.8 | 295 | 0.238 | 275 | 0.56 |

In summary, the present invention effectively overcomes various shortcomings and has high industrial utilization value.

The above-mentioned embodiments only exemplarily illustrate the principles and effects of the present invention, and are not intended to limit the present invention. Modifications or variations of the above-described embodiments may be made by those skilled in the art without departing from the spirit and scope of the invention. Therefore, all equivalent modifications or changes made by those who have common knowledge in the art without departing from the spirit and technical concept disclosed by the present invention shall be still covered by the claims of the present invention.

## Claims

**1.** A metal-organic framework material, comprising a plurality of connected M-O-L secondary structure units, wherein the M is selected from metals, the O is an oxygen atom from a carboxylate-radical-based linking cluster, and the L is an organic linking ligand, wherein the organic linking ligand comprises a flexible triangular ligand, and two or more linear ligands with different lengths.

2. The metal-organic framework material according to claim 1, wherein the M is Zn.

3. The metal-organic framework material according to claim 1, wherein the metal-organic framework material is a three-dimensional porous framework formed by Zn-O-octahedral inorganic units connected by the organic linking ligands.

4. The metal-organic framework material according to claim 1, wherein the linear ligand is selected from a binary nitrogen-containing aromatic heterocyclic organic ligand, a binary aromatic carboxylic acid organic ligand, or a mixture of the binary nitrogen-containing aromatic heterocyclic organic ligand and the binary aromatic carboxylic acid organic ligand.

5. The metal-organic framework material according to claim 1, wherein the linear ligand is selected from the groups with the chemical structural formula shown below:

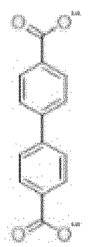 , 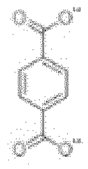 , 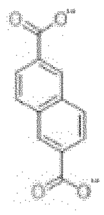 , 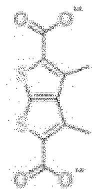 , 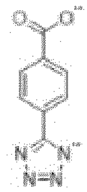 , 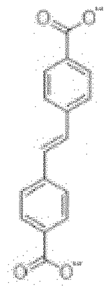 .

6. The metal-organic framework material according to claim 1, wherein the flexible triangular ligand is selected from a ternary aromatic carboxylic acid organic ligand.

7. The metal-organic framework material according to claim 1, wherein the flexible triangular ligand is selected from the groups with the chemical structural formula shown below:

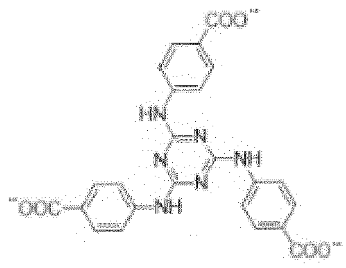 .

8. The metal-organic framework material according to claim 1, wherein the metal-organic framework material is in the form of $(Zn_4O)_6(TATAB)_8(NDC)_2(BPDC)_4$, $(Zn_4O)_6(TATAB)_8(TDC)_3(BPDC)_3$, $(Zn_4O)_6(TATAB)_8(TZB)_3(BPDC)_3$, $(Zn_4O)_6(TATAB)_8(BDC)_3(EDBA)_3$, $(Zn_4O)_6(TATAB)_8(BDC)_3(EDBA)_3$, $(Zn_4O)_{12}(TATAB)_{16}(TDC)_9(EDBA)_3$, or $(Zn_4O)_3(TATAB)_4(TZB)_2(EDBA)_1$.

9. A method for preparing the metal-organic framework material according to any one of claims 1-8, comprising:

dispersing a metal skeleton precursor molecule, an organic linking ligand precursor molecule in a solvent, and performing self-assembling to obtain the metal-organic framework material.

10. The use of the metal-organic framework material according to any one of claims 1-8 in the preparation of gas storage material, wherein the gas is selected from $CH_4$, $H_2$, $O_2$, PHs, and $SF_6$.

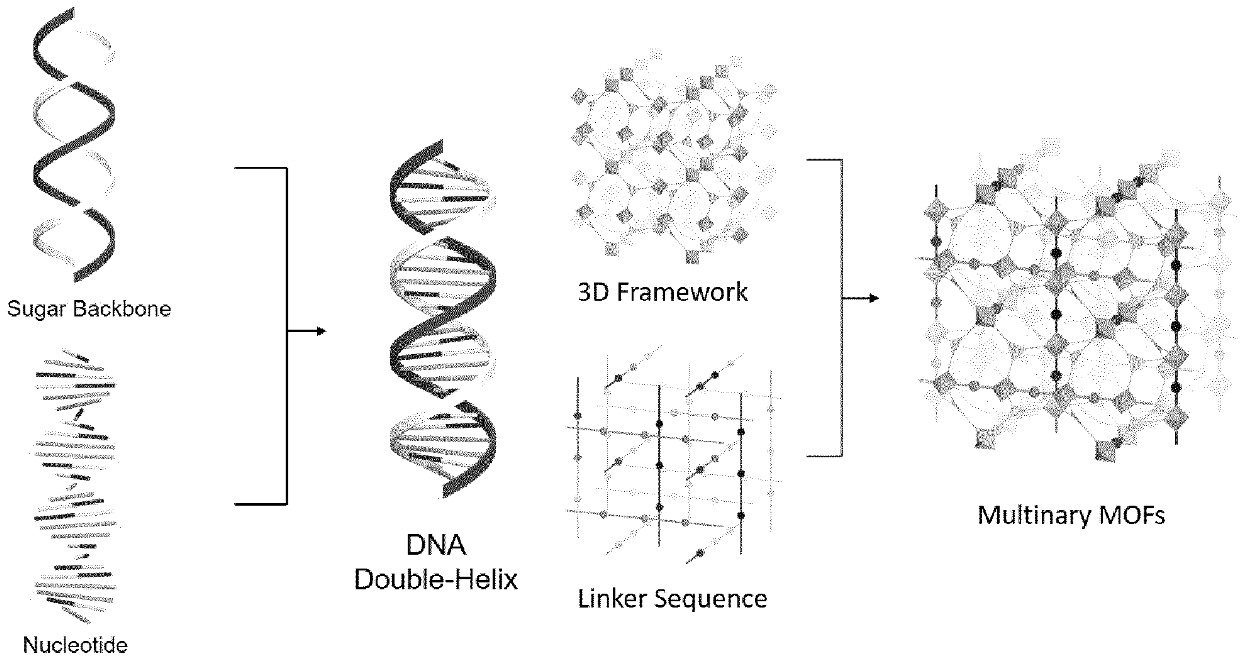
Sugar Backbone
Nucleotide
DNA
Double-Helix
3D Framework
Linker Sequence
Multinary MOFs

Fig. 1

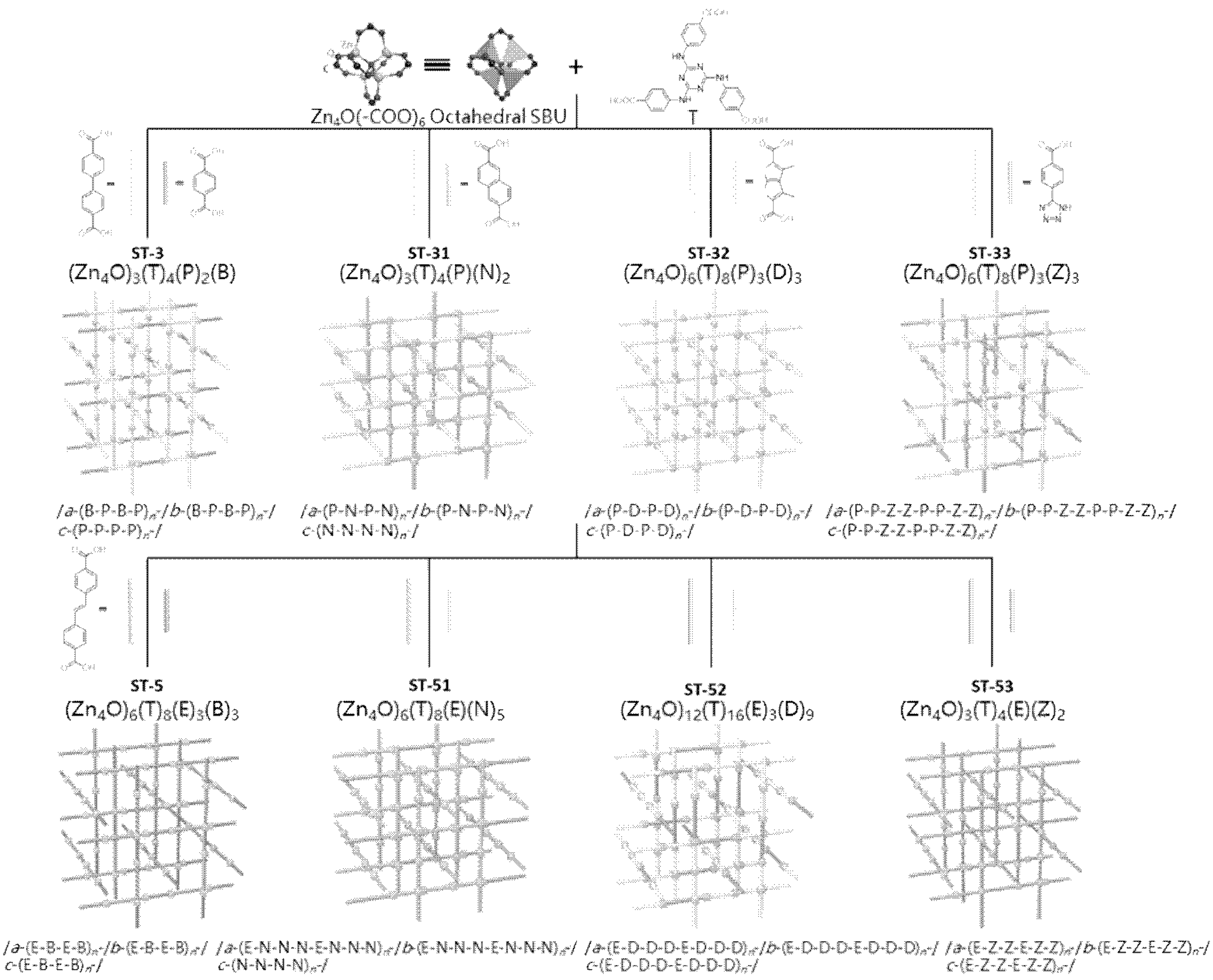
$Zn_4O(-COO)_6$ Octahedral SBU
T
ST-3
$(Zn_4O)_3(T)_4(P)_2(B)$
ST-31
$(Zn_4O)_3(T)_4(P)(N)_2$
ST-32
$(Zn_4O)_6(T)_8(P)_3(D)_3$
ST-33
$(Zn_4O)_6(T)_8(P)_3(Z)_3$
/a-(B-P-B-P)n-/b-(B-P-B-P)n-/ c-(P-P-P-P)n-/
/a-(P-N-P-N)n-/b-(P-N-P-N)n-/ c-(N-N-N-N)n-/
/a-(P-D-P-D)n-/b-(P-D-P-D)n-/ c-(P-D-P-D)n-/
/a-(P-P-Z-Z-P-P-Z-Z)n-/b-(P-P-Z-Z-P-P-Z-Z)n-/ c-(P-P-Z-Z-P-P-Z-Z)n-/
ST-5
$(Zn_4O)_6(T)_8(E)_3(B)_3$
ST-51
$(Zn_4O)_6(T)_8(E)(N)_5$
ST-52
$(Zn_4O)_{12}(T)_{16}(E)_3(D)_9$
ST-53
$(Zn_4O)_3(T)_4(E)(Z)_2$
/a-(E-B-E-B)n-/b-(E-B-E-B)n-/ c-(E-B-E-B)n-/
/a-(E-N-N-N-E-N-N-N)n-/b-(E-N-N-N-E-N-N-N)n-/ c-(N-N-N-N)n-/
/a-(E-D-D-D-E-D-D-D)n-/b-(E-D-D-D-E-D-D-D)n-/ c-(E-D-D-D-E-D-D-D)n-/
/a-(E-Z-Z-E-Z-Z)n-/b-(E-Z-Z-E-Z-Z)n-/ c-(E-Z-Z-E-Z-Z)n-/

Fig. 2

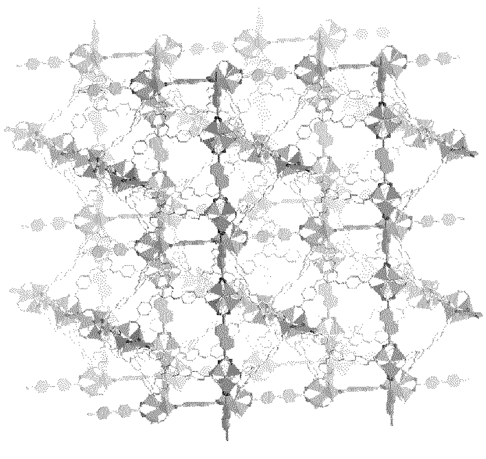

Fig. 3

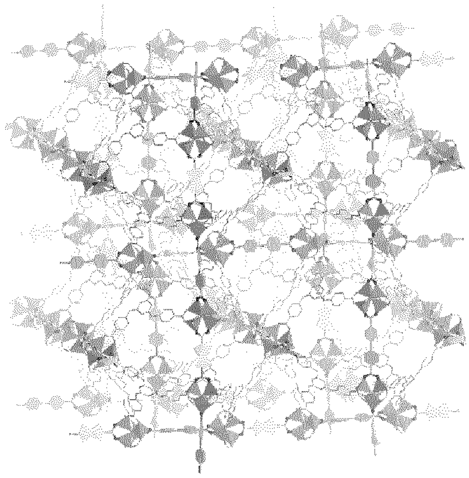

Fig. 4

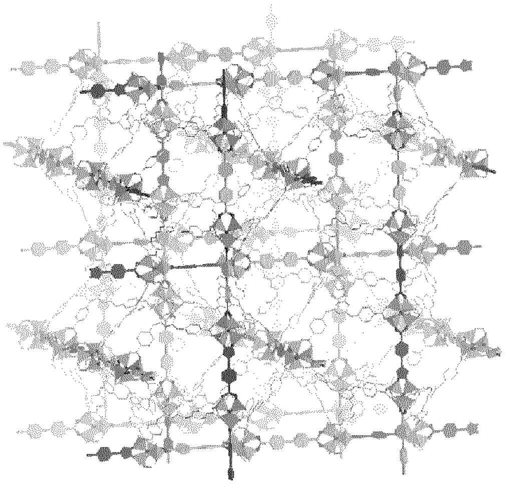

Fig. 5

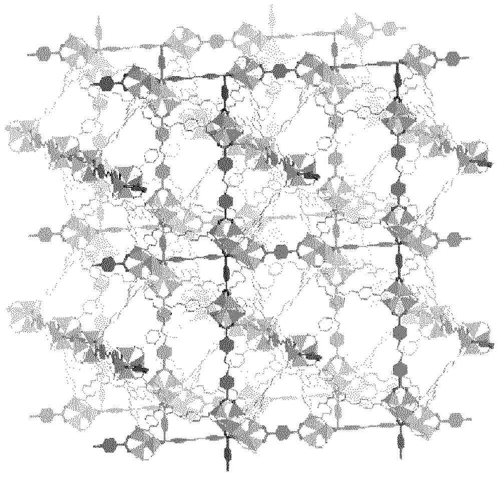

Fig. 6

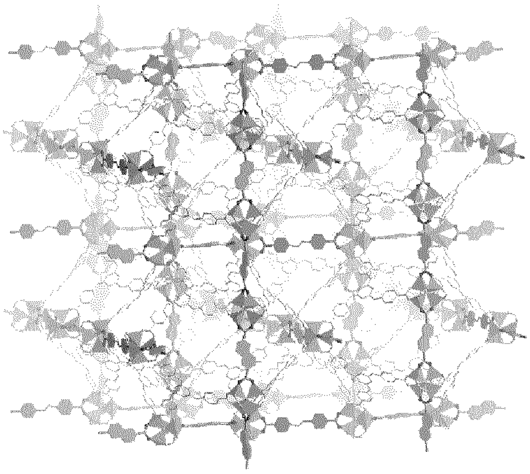

Fig. 7

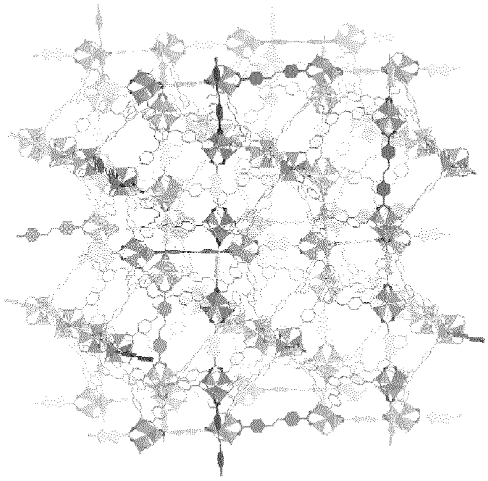

Fig. 8

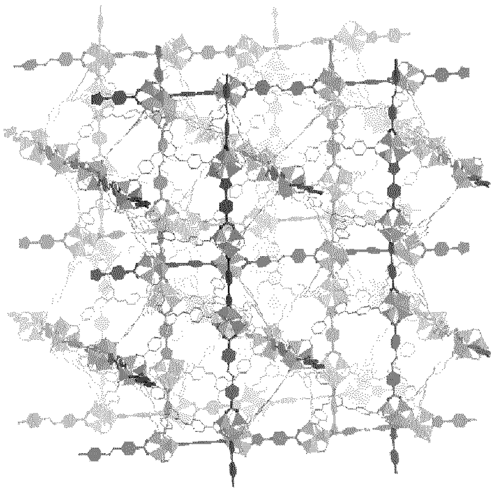

Fig. 9

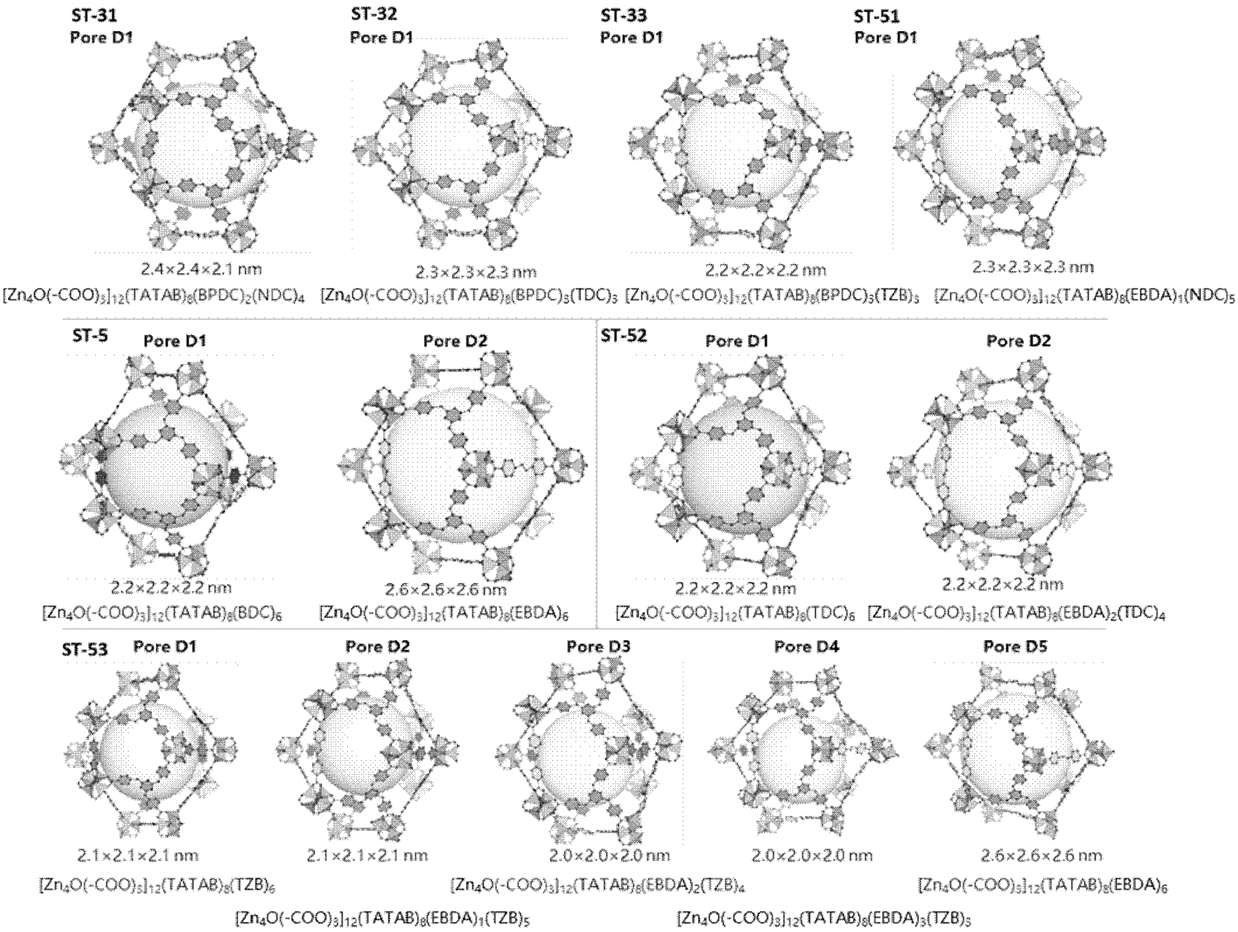
ST-31
Pore D1
2.4×2.4×2.1 nm
[Zn4O(-COO)3]12(TATAB)8(BPDC)2(NDC)4
ST-32
Pore D1
2.3×2.3×2.3 nm
[Zn4O(-COO)3]12(TATAB)8(BPDC)3(TDC)3
ST-33
Pore D1
2.2×2.2×2.2 nm
[Zn4O(-COO)3]12(TATAB)8(BPDC)3(TZB)3
ST-51
Pore D1
2.3×2.3×2.3 nm
[Zn4O(-COO)3]12(TATAB)8(EBDA)1(NDC)5
ST-5
Pore D1
2.2×2.2×2.2 nm
[Zn4O(-COO)3]12(TATAB)8(BDC)6
Pore D2
2.6×2.6×2.6 nm
[Zn4O(-COO)3]12(TATAB)8(EBDA)6
ST-52
Pore D1
2.2×2.2×2.2 nm
[Zn4O(-COO)3]12(TATAB)8(TDC)6
Pore D2
2.2×2.2×2.2 nm
[Zn4O(-COO)3]12(TATAB)8(EBDA)2(TDC)4
ST-53
Pore D1
2.1×2.1×2.1 nm
[Zn4O(-COO)3]12(TATAB)8(TZB)6
Pore D2
2.1×2.1×2.1 nm
[Zn4O(-COO)3]12(TATAB)8(EBDA)1(TZB)5
Pore D3
2.0×2.0×2.0 nm
[Zn4O(-COO)3]12(TATAB)8(EBDA)2(TZB)4
Pore D4
2.0×2.0×2.0 nm
[Zn4O(-COO)3]12(TATAB)8(EBDA)3(TZB)3
Pore D5
2.6×2.6×2.6 nm
[Zn4O(-COO)3]12(TATAB)8(EBDA)6

Fig. 10

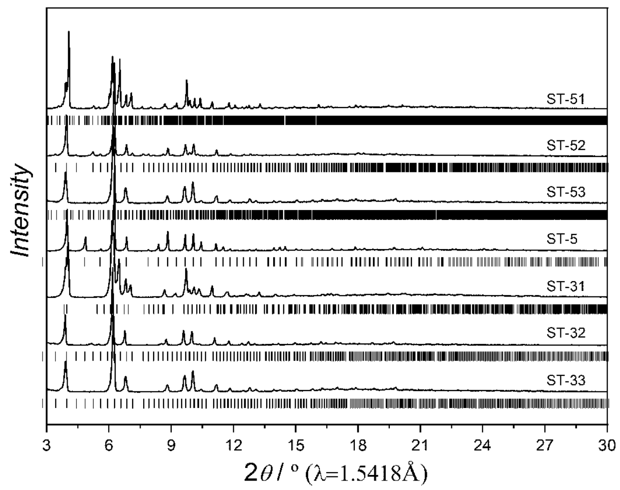
ST-51
ST-52
ST-53
ST-5
ST-31
ST-32
ST-33
Intensity
3
6
9
12
15
18
21
24
27
30
2θ / ° (λ=1.5418Å)

Fig. 11

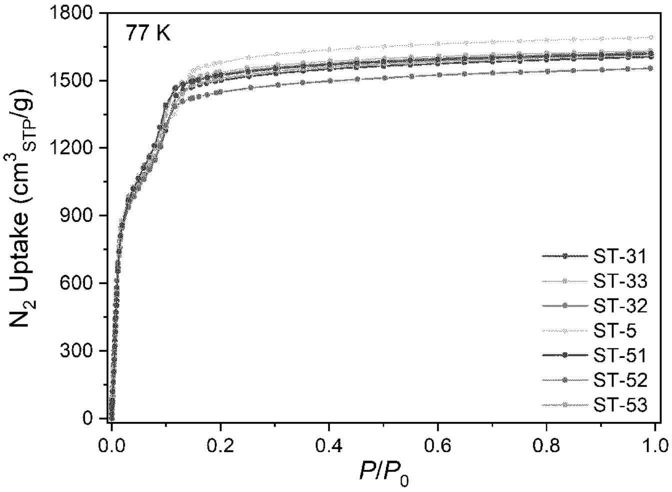


Fig. 12

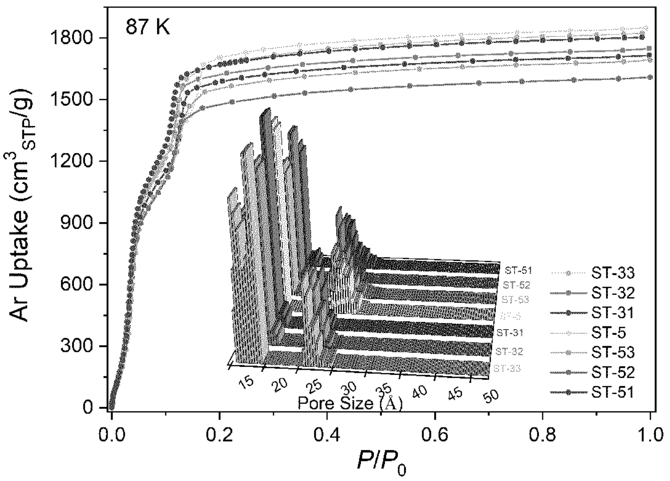


Fig. 13

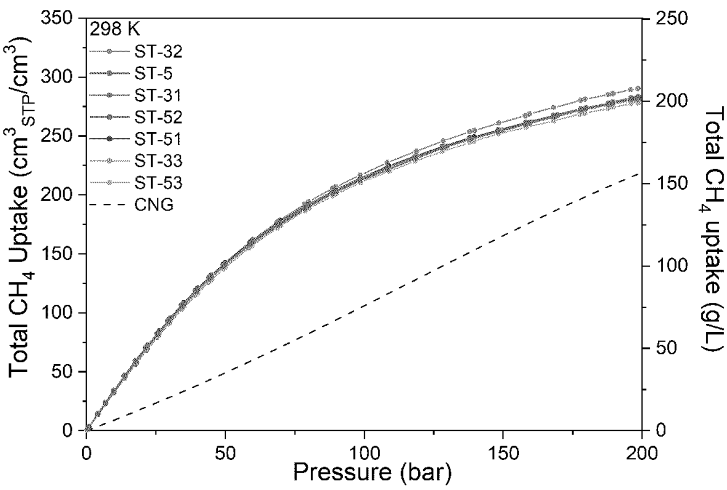


Fig. 14

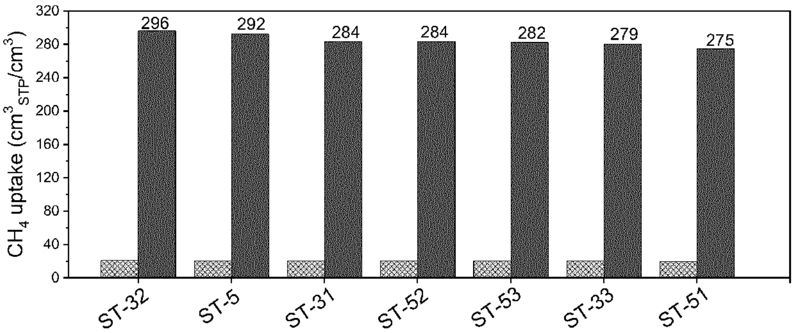
CH4 uptake (cm3STP/cm3)
320
280
240
200
160
120
80
40
0
296
292
284
284
282
279
275
ST-32
ST-5
ST-31
ST-52
ST-53
ST-33
ST-51

Fig. 15

## INTERNATIONAL SEARCH REPORT

International application No. **PCT/CN2021/089184**

**A. CLASSIFICATION OF SUBJECT MATTER**

C08G 83/00(2006.01)i

According to International Patent Classification (IPC) or to both national classification and IPC

**B. FIELDS SEARCHED**

Minimum documentation searched (classification system followed by classification symbols)

C08G83

Documentation searched other than minimum documentation to the extent that such documents are included in the fields searched

Electronic data base consulted during the international search (name of data base and, where practicable, search terms used)

CNKI, CNABS, DWPI, SIPOABS, STN（CAPLUS, REGISTRY）; 上海科技大学, 章跃标, 梁聪聪, 师兆麟, 金属, 有机框架材料, 配位聚合物, 锌, 酸, 三嗪, 气体, 吸附, 储存, metal organic framework, MOF, coordination polymer, zinc, Zn, acid, triazine, gas, storage

**C. DOCUMENTS CONSIDERED TO BE RELEVANT**

| Category* | Citation of document, with indication, where appropriate, of the relevant passages | Relevant to claim No. |
|---|---|---|
| X | Cong-Cong Liang et al. "Engineering of Pore Geometry for Ultrahigh Capacity Methane Storage in Mesoporous Metal−Organic Frameworks," *J. Am. Chem. Soc.*, Vol. 139, 05 September 2017 (2017-09-05), pages 13300-13303, in particular page 13300, Scheme 1, abstract, Support Materials, page S3 | 1-10 |
| A | CN 105051269 A (UTI LIMITED PARTNERSHIP) 11 November 2015 (2015-11-11) entire document | 1-10 |
| A | CN 103100372 A (ZHEJIANG UNIVERSITY) 15 May 2013 (2013-05-15) entire document | 1-10 |
| A | CN 103739562 A (DEZHOU UNIVERSITY) 23 April 2014 (2014-04-23) entire document | 1-10 |
| A | CN 106866988 A (NANKAI UNIVERSITY) 20 June 2017 (2017-06-20) entire document | 1-10 |

☐ Further documents are listed in the continuation of Box C. ☑ See patent family annex.

* Special categories of cited documents:
- "A" document defining the general state of the art which is not considered to be of particular relevance
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| **20 July 2021** | **29 July 2021** |
| Name and mailing address of the ISA/CN<br>**China National Intellectual Property Administration (ISA/CN)**<br>**No. 6, Xitucheng Road, Jimenqiao, Haidian District, Beijing 100088**<br>**China** | Authorized officer |
| Facsimile No. **(86-10)62019451** | Telephone No. |

Form PCT/ISA/210 (second sheet) (January 2015)

**INTERNATIONAL SEARCH REPORT**
**Information on patent family members**

International application No.
**PCT/CN2021/089184**

| Patent document cited in search report | Publication date (day/month/year) | Patent family member(s) | Publication date (day/month/year) |
|---|---|---|---|
| CN 105051269 A | 11 November 2015 | WO 2014138878 A1 | 18 September 2014 |
| | | JP 6586366 B2 | 02 October 2019 |
| | | KR 102057165 B1 | 18 December 2019 |
| | | EP 2971277 B1 | 27 January 2021 |
| | | BR 112015021875 A2 | 18 July 2017 |
| | | AU 2014231699 A1 | 29 October 2015 |
| | | KR 20150127218 A | 16 November 2015 |
| | | EP 2971277 A1 | 20 January 2016 |
| | | CA 2904546 A1 | 18 September 2014 |
| | | JP 2016516677 A | 09 June 2016 |
| | | BR 112015021875 A8 | 26 November 2019 |
| | | EP 2971277 A4 | 21 December 2016 |
| | | US 9782745 B2 | 10 October 2017 |
| | | CN 105051269 B | 19 March 2019 |
| | | AU 2014231699 B2 | 04 January 2018 |
| | | US 2016016148 A1 | 21 January 2016 |
| CN 103100372 A | 15 May 2013 | CN 103100372 B | 02 July 2014 |
| CN 103739562 A | 23 April 2014 | CN 103739562 B | 09 September 2015 |
| CN 106866988 A | 20 June 2017 | None | |

Form PCT/ISA/210 (patent family annex) (January 2015)